Europäisches Patentamt

European Patent Office

Office européen des brevets

(11) Veröffentlichungsnummer: **0 050 218**
**B1**

(12) **EUROPÄISCHE PATENTSCHRIFT**

(45) Veröffentlichungstag der Patentschrift:
14.05.86

(51) Int. Cl.⁴: **B 02 C 21/02, A 01 B 77/00**

(21) Anmeldenummer: **81107448.3**

(22) Anmeldetag: **19.09.81**

(54) Vorrichtung zur Zerkleinerung von Gesteinsbrocken in bzw. auf vorwiegend landwirtschaftlich genutzten Böden.

(30) Priorität: **20.10.80 DE 3039553**

(43) Veröffentlichungstag der Anmeldung:
**28.04.82 Patentblatt 82/17**

(45) Bekanntmachung des Hinweises auf die Patenterteilung:
**14.05.86 Patentblatt 86/20**

(84) Benannte Vertragsstaaten:
**AT FR GB IT SE**

(56) Entgegenhaltungen:
**FR - A - 1 177 915**
**FR - A - 2 277 624**
**GB - A - 1 433 396**
**US - A - 2 509 163**
**US - A - 2 751 831**

**Die Akte enthält technische Angaben, die nach dem Eingang der Anmeldung eingereicht wurden und die nicht in dieser Patentschrift enthalten sind.**

(73) Patentinhaber: **Josef Willibald, Maschinenfabrik, D-7771 Frickingen 2 (Altheim) (DE)**

(72) Erfinder: **Willibald, Josef, Frickinger Strasse 97, D-7771 Frickingen 21(Altheim) (DE)**

(74) Vertreter: **Seemann, Norbert W., Brehmstrasse 37, D-7320 Göppingen (DE)**

ACTORUM AG

## Beschreibung

Die vorliegende Erfindung bezieht sich auf eine schleppergezogene bzw. selbstfahrende, maschinelle Vorrichtung zur kontinuierlichen Zertrümmerung von Gesteinsbrocken jeglicher Art, Grösse und Menge, so wie sie in fast allen Gegenden vorkommen und zwar an bzw. leicht unterhalb der Erdoberfläche bei vorwiegend landwirtschaftlich genutzten Böden. In der Landtechnik und hierbei insbesondere bei der Tieflockerung von Ackerböden, der Bearbeitung von mit lebenden oder abgestorbenen Pflanzen bedeckten Feldern, aber auch beim maschinellen Abernten reifer Fruchtbestände, treten in Gegenden, mit besonders steinhaltigen Böden immer wieder Beschädigungen an den Arbeitswerkzeugen auf, hervorgerufen durch das Anfahren oder Einziehen grösserer Gesteinsbrocken mit den Bearbeitungsgeräten. Da ein Aufsammeln von Steinen wegen deren ständigem «Nachwachsen» aus den tiefliegenden Bodenschichten heraus, wenig sinnvoll ist, wurde bereits versucht, mit sogenannten Mulchgeräten, die entsprechende Verstärkungen im maschinellen und baulichen Bereich erhielten, eine Zertrümmerung grösserer Gesteinsbrocken in unschädliche, kleinere Stükke, zu erzielen. Dabei hat sich aber gezeigt, dass dies vom Grundgedanken her nicht unmöglich ist, die vorhandenen maschinellen Einrichtungen jedoch einer dem zugedachten Zweck entsprechenden, speziellen Ausgestaltung und Funktionserweiterung bedürfen.

Dies gilt dabei vom baulichen Prinzip her ebenso für das aus der DE-C-2 432 739 bekannte Mulchgerät, bei dem der schlegelbesetzten Arbeitswelle eine Aufnehmerwalze vorgeschaltet ist, wie auch für die speziell als Erdschollenzerkleinerer gedachte Vorrichtung gemäss der US-A-2 751 831, bei der vor der eigentlichen Zerkleinerungstrommel zwar ebenfalls eine Aufnahmewalze sitzt, deren Finger bzw. Zinken jedoch so gelagert bzw. ausgebildet sind, dass im Boden befindliche Steine jeglicher Art nicht mit aufgenommen werden, also auf der freigeräumten Bodenoberfläche liegen bleiben.

Weiterhin bekannt und speziell zum Zwecke der Gesteinszerkleinerung auf Ackerböden gedacht, ist noch eine schleppergezogene Vorrichtung gemäss der GB-A-1 433 396, bei der die hierbei starren Aufnehmerzinken zwar hinter der eigentlichen Zerkleinerungstrommel angeordnet sind, das Gesamtgerät jedoch einen extrem hohen Arbeitswiderstand und damit einen hohen Zugkraftbedarf dadurch besitzt, dass sowohl die Aufnehmerzinken wie auch die Schlegel der Arbeitswelle teilweise durch das Erdreich hindurchlaufen und letztere dabei ständig von ihrem Schwungmoment her stark abgebremst werden. Ein weiterer Nachteil dieses zuletzt genannten Gerätes muss noch darin gesehen werden, dass sich Steine in den keilförmig verjüngenden Spalt zwischen den starren Zinkenspitzen und den rotierenden Schlegelwerkzeugen einklemmen und die gesamte Gerätefunktion ausser Kraft setzen können, wenn die Trommel aufgrund des Durchgangs der Schlegel durch den Boden eine gravierende Drehzahlverringerung erfährt.

Die vorliegende Erfindung hat es sich deshalb neben einer erheblichen Funktionsverbesserung auch zur Aufgabe gemacht, den Arbeitswiderstand der Aufnehmerzinken sowie der Schlegelwelle einer gattungsgemässen Vorrichtung nach der GB-A-1 433 396 durch geeignete bauliche Massnahmen soweit herabzusetzen, dass der Leistungsbedarf eines derart neuen Gesamtgerätes erheblich verringert wird, d.h., dass das erfindungsgemässe Gerät auch mit kleineren Schleppern od.dgl. betrieben werden kann.

Die Lösung dieser Aufgabe ergibt sich aus dem Patentanspruch 1. Die Ansprüche 2 bis 4 enthalten besondere Ausführungsarten der Erfindung. Ein Ausführungsbeispiel der Erfindung ist den Zeichnungen zu entnehmen; letztere sind zudem im folgenden näher beschrieben. Es zeigen dabei in weitestgehend schematischer Darstellung im einzelnen:

Fig. 1 eine Seitenansicht des erfindungsgemässen Gerätes im Schnitt,

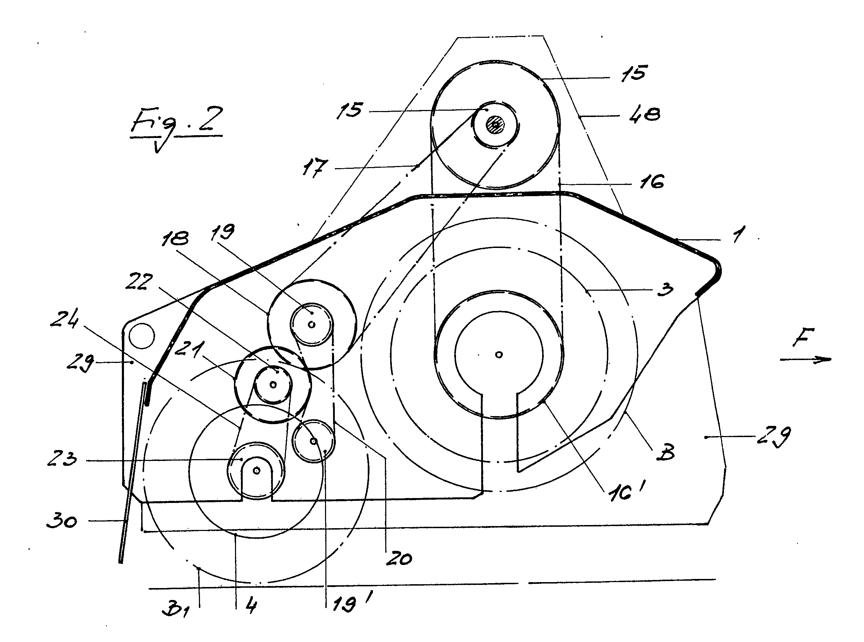

Fig. 2 die gleiche Ansicht mit Antriebsschema und

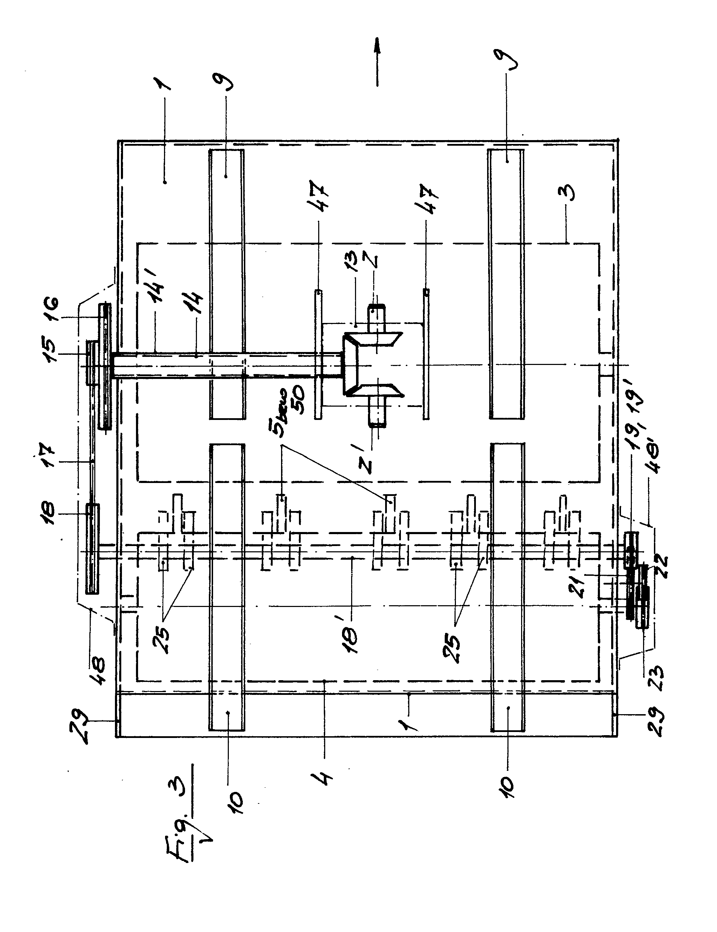

Fig. 3 eine Draufsicht zu Fig. 2.

Fig. 4 eine neuerungsgemässe Arbeitswelle in Ansicht,

Fig. 5 einen Schnitt zu Fig. 4 nach der Linie V–V,

Fig. 6 bis Fig. 8 Seiten-, Drauf- und Voreransicht eines neuerungsgemässen Arbeitswerkzeuges.

In dem haubenartigen Gehäuse 1 ist eine die Mulchschlegel 2 tragende Arbeitswelle 3 gelagert, der in Fahrtrichtung «F» gesehen, eine gleichfalls in diesem Gehäuse 1 drehend angetrieben eingesetzte Aufnehmertrommel 4, mit mindestens einer Reihe linear am Trommelumfang angeordneter oder darauf verteilt liegender und gegenüber letzterem hervorstehend daran angebrachten Zinken 5, nachgeordnet ist.

Diese Zinken 5 sind dabei in spezieller Ausgestaltung der Erfindung über einen Drehpunkt 6 hebelförmig am Trommelmantel 4 angelenkt und beispielsweise mittels Federn 7 in ihrer Arbeitslage derart gehalten, dass letztere ein Zurückklappen der Zinken 5 entgegen der Trommeldrehrichtung «R» in Aussparungen 8 des Trommelinnenraumes 4a beim Auftreffen auf ein Hindernis ermöglichen und dabei die strichpunktiert angedeutete Lage einnehmen können.

Auf der Oberseite des Gehäuses 1 sind Halterungen 9 bzw. 10 angebracht, die ein Umsetzen des Dreipunktanbaubockes 11 mittels Steckbolzen 12 von der Gerätevorder- auf die Geräterückseite ermöglichen, je nachdem, ob das Gerät im Front- oder Heckanbau an einer betreffenden, nicht dargestellten, Zugmaschine gefahren werden soll.

Hieraus resultiert auch, dass das Eingangs-Winkelgetriebe 13 zwei Zapfwellenstummel Z und Z' für den Anschluss der üblichen Gelenkwelle, als Verbindung zum Schlepperantrieb, aufweist. An dieses Winkelgetriebe 13 schliesst nun eine Horizontalwelle 14 zu einem Seitengetriebe 15 an, von dem einmal ein Riemen- oder Kettentrieb 16 zur Arbeitswelle 3 verläuft und ein weiterer 17, zu einem Zwischentrieb 18 auf der gleichen Gehäuseseite. Von dem Zwischentrieb 18 wiederum zeigt eine weitere Horizontalwelle 18' zur gegenüberliegenden Gehäuseseite ab, an der ein weiteres Seitengetriebe, bestehend aus Scheiben 19 und 19' mit Riemen 20, der zwecks Drehrichtungsumkehr über die Zwischenscheibe 21 auf die eigentlichen Antriebsräder 22 und 23 mit Riemenverbindung 24 der Aufnehmerwelle, treibt. Anstelle der hier beschriebenen Getriebeableitung ist es aber auch möglich, der Aufnehmertrommel 4 einen separaten Antrieb, z.B. einen Hydraulikmotor, zuzuordnen.

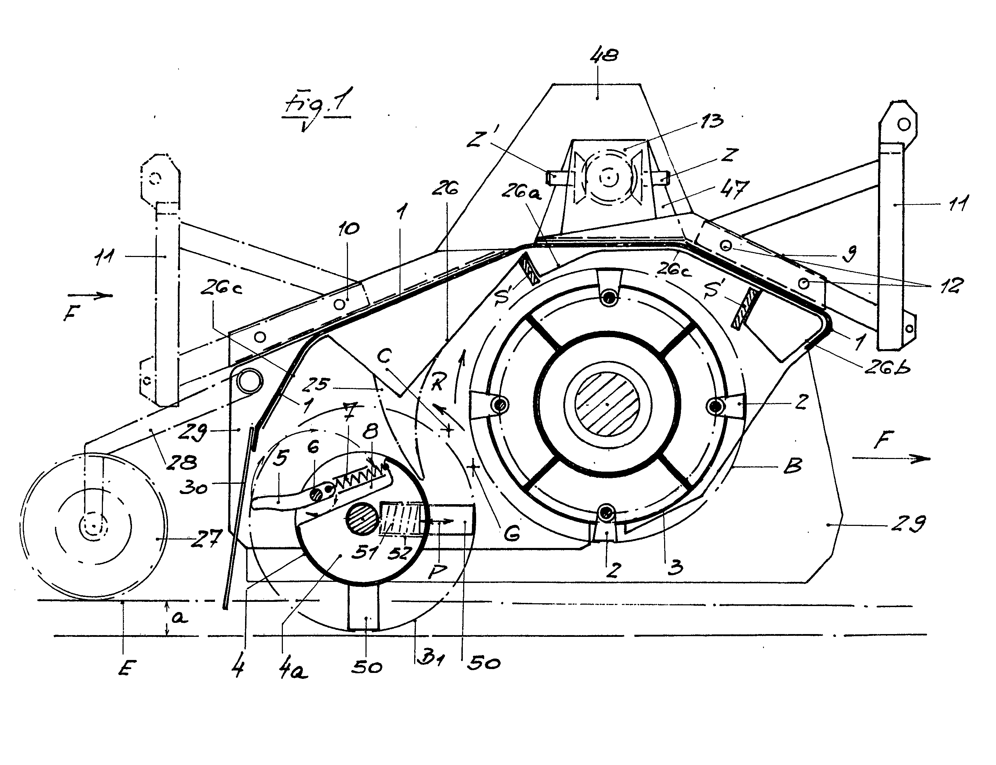

Besonders gute Arbeitsergebnisse werden zudem erzielt, wenn die von den Aufnehmerzinken 5 der Trommel 4 beschriebene Umlaufbahn «B$_1$» (Fig. 1) tiefer liegt als die von den Schlegeln 2 der Arbeitswelle 3 beschriebene Kreisbahn «B» und beide im Bereich der Gutübergabe «G» in etwa tangieren. Ein kamm- oder rechenförmiges Abstreifgitter 25 in der Umlaufbahn «B$_1$», und möglichst tangential an den Verlauf des benachbarten Verstärkungsprofils 26 der Gerätehaube 1 anschliessend, verhindert zudem, dass einerseits von den Zinken 5 aufgenommenes Gut nicht an die Mulchschlegel 2 übergeben, sondern nach hinten weitergefördert wird und hat zum anderen noch die vorteilhafte Wirkung, dass das Gut in dem Bereich «C» zwischen den Bahnbegrenzungen von B, B$_1$ und dem Profilverlauf der Pos. 26 gehalten, ständig umgewälzt und bereits vorzerkleinert wird, ehe es auf die eigentlichen, auf die Verstärkungsprofile 26a und 26b aufgebrachten, Schlagleisten trifft, die im übrigen ebenso einem hochfesten, jedoch zähen Material bestehen sollten, wie die Mulchschlegel 2.

Das gesamte Gerät wird letztlich noch vervollständigt durch die Möglichkeit der Anbringung von Nachlaufrädern 27 mittels Tragarmen 28 an den seitlichen Gehäuseplatten 29 und dem bei Mulchgeräten allgemein bereits bekannten, flexiblen bzw. beweglichen Prallschutzelementen 30. Ebenso ist es möglich, die Tragarme 28 der Räder 27 so zu gestalten, dass sie in die Halterungen 10 eingesetzt werden können. In spezieller baulicher und festigkeitsmässiger Ausgestaltung erstrecken sich die querverlaufenden Verstärkungsprofile 26 bis 26c an der Unterseite der Gerätehaube 1 über deren volle Breite bis zu den Seitenplatten 29 und bilden somit gemeinsam ein torsionssteifes, statisches System. Das Winkelgetriebe 13 ist zudem über Lagerplatten 47 auf der Oberseite der Gerätehaube 1 befestigt, die Horizontalwelle 14 in einem Hüllrohr 14' gelagert und die Seitengetriebe 15 bzw. 19 von Getriebehauben 48 und 48' abgedeckt.

Um nun noch die eine der verschiedenartigen Variationsmöglichkeiten der Ausgestaltung der Aufnehmertrommel 4 bzw. deren Zinken 5 anzudeuten, können auch eine oder mehrere, in Umlaufrichtung der Trommel zueinander versetzt bzw. auf Lücke liegende Reihen starrer Zinken 50 vorgesehen sein, die man zudem derart gestalten kann, dass sie bei Überlastung oder Auftreffen auf ein schweres Hindernis gemäss Pfeilrichtung «P» und entgegen der Wirkung einer Feder 51 in Taschen 52 des Trommelinnenraumes zurückweichen. Während die Zinken 5 speziell dazu ausgebildet sind Gut vom Erdboden «E» aufzunehmen, können die Zinken 50 auch über einen gewissen Bereich «a» im Erdboden verlaufen und aus diesem verfilztes Wurzelwerk, Steine u.dgl. ausheben und den Schlegeln zuführen; die Hauptarbeitswelle 3 bzw. die Schlegel laufen also immer etwas oberhalb zum Erdboden, vorzugsweise ohne diesen zu berühren, wodurch die Welle 3 stets ihr volles Schwungmoment behält, vom Erdbodenwiderstand nicht abgebremst und somit Antriebsenergie gespart wird.

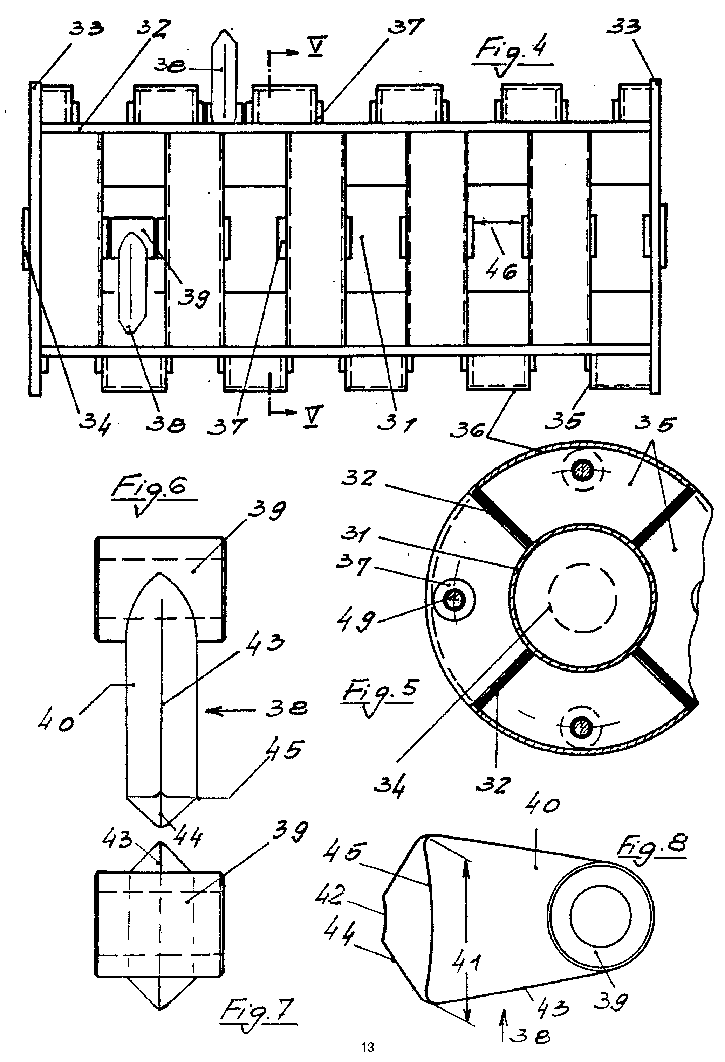

Zugleich besteht bei einem solchen Gerät die Forderung nach einer äusserst kompakten Arbeitswelle mit hoher Schwungmasse und daran angelenkten Arbeitswerkzeugen, die beim Auflaufen auf starke Hindernisse in die Aussenkontur des Wellenkörpers zurückweichen können, um Beschädigungen der gesamten Maschine durch Überlastung u.dgl. entgegenzuwirken. Eine solche Arbeitswelle könnte dabei so aussehen, wie in den Fig. 4 und 5 dargestellt, die Arbeitswerkzeuge sind zudem als ein mögliches Beispiel in den Figuren 6 bis 8 angedeutet.

Die skizzierte Arbeitswelle besteht als Grundelement aus einem zentralen Rohrkörper 31 mit aufgeschweissten Längsstegen 32 und den beiden Endplatten 33 mit Lagerzapfen 34. Zwischen die Stege 32 sind in Umlaufrichtung zueinander versetzt liegende Taschen eingeschweisst, die aus mindestens einem Seitenteil 35 und gewölbtem Deckblech 36 gebildet sind. An den Seitenteilen 35 sind die Lagerstellen 37 für die Arbeitswerkzeuge 38 angebracht, die entsprechend Fig. 6 bis 8 derart ausgebildet sein sollten, dass sie aus einem Lagerkörper 39 mit daran rechtwinklig anschliessendem Schlegel 40 bestehen, dessen Rückenbreite 41 grösser als das freie Messerende 42 ist, also etwa trapezförmig verläuft; Trennkanten 43 sowie angeschrägte Schneiden 44, die, bedingt durch ihre bodenseitige Innenwölbung 45 auch bei Abnutzung somit stets relativ spitz zulaufen, ergeben einen guten Zerkleinerungseffekt. Diese Arbeitswerkzeuge 38 sind dabei pendelnd in dem freien Raum 46 zwischen jeweils zwei Taschen 35, 36 bzw. Tasche 35, 36 und Endplatte 33 gelagert und können durch den Raum 46 frei hindurchschwingen. Zur Halterung der Arbeitswerkzeuge 38 dienen dabei vorteilhafterweise längs durchlaufende Steckachsen 49 auf denen die Naben des Lagerkörpers 39 aufgereiht sind.

Um das zuvor beschriebene Arbeitsgerät zudem universell an die jeweiligen Boden- bzw. Gesteinsverhältnisse oder, eventuell mit anders gestalteten, also mehr schneidenden als hammerkopfartigen Schlegeln, für den Einsatz als Forstmulchgerät zur Astholzzerkleinerung anpassen zu können, kann noch vorgesehen sein, den Achsabstand von der Arbeitswelle 3 und Aufnehmertrommel 4 veränderlich zu gestalten. Die Anordnung der Arbeitsschlegel 2 sollte dabei immer einen schraubenlinienförmigen Verlauf, ein- oder auch einandergegenüberliegend und um 180° versetzt mehrreihig, am Trommelumfang 3 haben. Die hammerkopfartigen Schlegel zur Gesteinszertrümmerung erhalten zudem zwecks Verminderung von Verschleisserscheinungen einen Hartmetallauftrag an ihren Schlagkanten.

**Patentansprüche**

1. Vorrichtung zur Zerkleinerung von Gesteinsbrocken auf vorwiegend landwirtschaftlich genutzten Böden, bestehend aus einem an einen Schlepper od.dgl. ankuppelbaren Gerät mit haubenartigem Gehäuse (1), darin zapfwellenangetrieben gelagerter, quer zur Fahrtrichtung (F) liegender Arbeitswelle (3) mit pendelnd daran angelenkten, schlegelartigen Zerkleinerungswerkzeugen (2) sowie in deren Bewegungsbahn liegenden Anschlägen und einer Reihe dieser Schlegelwelle in Fahrtrichtung nachgeordneten, teilweise im Erdboden verlaufenden Zinken (5, 50) zum Aufnehmen bzw. Ausheben von auf bzw. unterhalb der Bodenoberfläche liegenden Steinen, dadurch gekennzeichnet, dass die Aufnehmerzinken (5 bzw. 50) an einer zwangsweise drehend angetriebenen Trommel (4) sitzen, wobei die Umlaufbahn (B) von den Zerkleinerungswerkzeugen (2) oberhalb des Erdbodens (E) verläuft und mit der Umlaufbahn (B$_1$) von den Aufnehmerzinken (5 bzw. 50) im Bereich der Steinübergabe (G) annähernd tangiert und in diesem Bereich zudem, über die gesamte Arbeitsbreite verteilt, zusätzliche Abstreiferarme (25), Gitter, Rechen od.dgl. angeordnet sind, zwischen denen die Aufnehmerzinken (5 bzw. 50) am Ende ihrer vom Erdboden (E) ausgehenden Aufwärtsbewegung, hindurchlaufen.

2. Vorrichtung nach Anspruch 1, dadurch gekennzeichnet, dass die Aufnehmerzinken (5) entgegen der Drehrichtung (R) der Aufnehmertrommel (4) zurückklappbar und in den Umfangs- bzw. Innenbereich (8) des Trommelmantels (4a) einschwenkbar an letzterem gelagert sowie über Federn (7) in ihrer Arbeitslage, gehalten sind.

3. Vorrichtung nach Anspruch 1, dadurch gekennzeichnet, dass die Zinken (5 bzw. 50) einzeln oder paarweise in Trommelumlaufrichtung (R$_1$) versetzt zueinander liegen sowie in radialer Richtung (P) in Taschen (52) des Trommelinnenraumes (4a) einfahrbar sind.

4. Vorrichtung nach einem der Ansprüche 1 bis 3, dadurch gekennzeichnet, dass die Anschläge als Schlagleisten (S) ausgebildet und an den auf der Innenseite des haubenartigen Gerätegehäuses (1) liegenden Verstärkungsprofilen (26, 26a, 26b), angeordnet sind.

**Claims**

1. An implement for the comminution of stones on land primarily used for agriculture, comprising an appliance suitable for coupling to a tractor or similar unit, the said appliance having a hood-like housing (1) within which is fitted a power-take-off-driven working shaft (3) that is carried crosswise to the direction of travel (F) and that is equipped with pendulously suspended comminution tools (2) and within which are also fitted stops (S) and a series of tines (5 or 50), located behind the working shaft (3) in the direction of travel, which run partly within the soil to pick up and lift out stones that are on or beneath the surface of the soil, characterized by the lifting tines (5 or 50) being located on a power driven drum (4), whereby the orbital path (B) of the comminution tools (2) is above the ground (E) and closely approaches the orbital path (B$_1$) of the pick-up tines (5 or 50) in the region of stone transfer (G), in which region there are addtional wiper arms (25), gratings, rakes or similar devices, spread over the entire working width, between which the pick-up tines (5 or 50) pass at the end of their upwards movement after leaving the ground (E).

2. An implement in accordance with Claim 1, characterized by the pick-up tines (5) being capable of being moved back contrary to the direction of rotation (R) of the carrier drum (4) and of being swung into the perimeter or interior region (8) of the drum mantle (4a) to which they are secured and held in their working position by springs (7).

3. An implement in accordance with Claim 1, characterized by the tines (5 or 50) being offset relative to one another, singly or in pairs, in the direction of drum rotation (R$_1$) and being capable of being moved into pockets (52) in the drum interior (4a).

4. An implement in accordance with one of the claims 1 to 3, characterized by the stops being in the form of stop bars (S) fitted to strengthening sections (26, 26a, 26b) on the inside of the hood-like implement housing.

**Revendications**

1. Appareil à fragmenter des morceaux de roche sur des sols principalement utilisés pour l'agriculture, formé d'un instrument pouvant être attelé à un tracteur, ou engin similaire, et muni d'une enveloppe similaire à un dôme, d'un arbre de travail (3) placé transversalement à la direction (F) de la marche, monté de manière à être entraîné par l'arbre de prise de force dans cette enveloppe, avec des outils de fragmentation (2) similaires à des fléaux, articulés de façon oscillante à cet arbre ainsi que de butées situées dans leur trajectoire et d'une série de dents (5, 50) placées après cet arbre de fléaux dans le sens de la marche, partiellement situées dans le sol, pour ramasser ou soulever des pierres situées sur la surface du sol ou en dessous de celle-ci, caractérisé en ce que les dents ramasseuses (5, 50) sont montées sur un tambour (4) entraîné obligatoirement en rotation, la trajectoire de rotation (B) des outils de fragmentation (2) étant siutée au-dessus du sol (E) et étant approximativement tangente à la trajectoire de rotation (B$_1$) des dents ramasseuses (5, 50) dans la région de la transmission (G) des pierres et qu'en outre, dans cette région sont disposés des bras détacheurs supplémentaires, des grilles, des râteaux ou éléments similaires, répartis sur toute la largeur de travail, entre lesquels les dents ramasseuses (5, 50) passent à la fin de leur mouvement ascendant partant du sol (E).

2. Appareil selon la revendication 1, caractérisé en ce que les dents ramasseuses (5) peuvent être rabattues à l'envers du sens de rotation (R) du tambour ramasseur (4) et peuvent être montées sur la paroi latérale (4a) du tambour, de manière à pouvoir pivoter vers la région circonférentielle ou intérieure (8) de celle-ci, et sont retenues dans leur position de travail par l'intermédiaire de ressorts (7).

3. Appareil selon la revendication 1, caractérisé en ce que les dents (5, 50) sont placées avec décalage mutuel, individuellement ou par paires, dans la direction de rotation ($R_1$) du tambour et peuvent être introduites en direction radiale (P) dans des logements (52) de l'intérieur (4a) du tambour.

4. Appareil selon l'une des revendications 1 à 3, caractérisé en ce que les butées sont conçues sous forme de battoirs (S) et sont disposées sur les profilés de renforcement (26, 26a, 26b) situés sur le côté intérieur de l'enveloppe d'appareil similaire à un dôme.

Fig.1

0 050 218

Fig. 2

Fig. 3

0 050 218

Fig.4

Fig.5

Fig.6

Fig.7

Fig.8

13